# EUROPEAN PATENT APPLICATION

(11) **EP 2 275 762 A1**
(43) Date of publication of application: **19.01.2011**
(21) Application number: 09160537.8
(22) Date of filing: 18.05.2009
(51) Int. Cl.: F25J 1/02, F02C 7/143

(54) **Method of cooling a hydrocarbon stream and appraratus therefor**

(71) Applicant: Shell Internationale Research Maatschappij B.V., 2596 HR Den Haag (NL)
(72) Inventor: Van De Lisdonk, Carolus Antonius Cornelis, 2596 HR The Hague (NL); Straver, Alexander Emanuel Maria, 2596 HR The Hague (NL); Tanaeva, Irina, 2596 HR The Hague (NL)
(74) Representative: Matthezing, Robert Maarten

(57) **Abstract**

Method and apparatus for cooling a hydrocarbon stream (520) to produce an at least partially liquefied hydrocarbon stream (530). A cooled main refrigerant stream (245) is further cooled against at least a part of one or more expanded cooled pre-cooling refrigerant streams (155). A hydrocarbon stream (520) is at least partially liquefied in one or more main heat exchangers (220) against an expanded cooled main refrigerant stream (255), to provide an at least partially, preferably fully, liquefied hydrocarbon stream (530). The air inlet stream (45a) of a first gas turbine (50a) is cooled using cooling duty from the main refrigerant in the main refrigerant circuit (200) to provide a cooled air inlet stream (55a) to the first gas turbine (50a).

## Description

The present invention provides a method of cooling a hydrocarbon stream, such as natural gas, to produce an at least partially, preferably fully, liquefied hydrocarbon stream, and an apparatus therefor.

A common example of a hydrocarbon stream that is cooled to produce a liquefied hydrocarbon stream is natural gas, such as to produce Liquefied Natural Gas (LNG).

The liquefaction of a hydrocarbon or mixture of hydrocarbons can be carried out by one or more cooling circuits comprising one of more refrigerants. The refrigerant goes through a compression and cooling step prior to heat exchange with the hydrocarbon. The compression step utilises one or more compressors which are driven by one or more drivers, such as gas turbine drivers.

A liquefaction unit is designed to operate at a particular ambient temperature, such as the average ambient temperature for the area where the unit is to be situated. Thus, the individual components such as the compressors are conventionally designed for average ambient conditions, with a fixed compressor head (i.e. discharge versus suction pressure ratio) versus volumetric flow curve. At higher ambient temperature conditions, the discharge pressure of the pre-cooling compressors will be higher because of the higher pre-cooling refrigerant condensing temperature in the ambient coolers. At a higher discharge pressure, all the pre-cooling refrigerant pressure levels will increase in pressure as well, given a relatively small pressure variation. The higher pre-cooling refrigerant pressure levels will lead to a decrease in the volumetric flow in the pre-cooling compressor, leading to a reduction in the production of the liquefied hydrocarbon.

In addition, higher temperature ambient conditions will lower the power output of a gas turbine driving a refrigerant compressor such that the mass flow of refrigerant is reduced, leading to a further decrease in volumetric flow. This problem can be particularly severe in the case of aeroderivative gas turbines which are variable speed machines. In contrast to heavy duty gas turbines, aeroderivative gas turbines do not require a starter/helper motor. Starter/helper motors supplied with heavy duty gas turbines can be used to compensate for the loss of output power of the gas turbine at higher ambient temperatures. This option would not be available in the case of aeroderivative gas turbines which are not conventionally used with a starter/helper motor.

The combination of these two effects moves the refrigerant compressor towards surge at ambient temperatures higher than the designed operating conditions. The compressor may then go into recycle mode reducing the effective power input for hydrocarbon liquefaction, thus reducing liquefied hydrocarbon production.

It is known that the amount of power available from a gas turbine is dependent, among other things, upon the temperature of the air inlet stream, such that an increase in power can be achieved by lowering the temperature of the air inlet stream.

US Patent No. 6,324,867 discloses a natural gas liquefaction system and process in which excess refrigeration available in a pre-cooling first refrigerant circuit, which can be for example a propane circuit, is used to cool the inlet air to pre-cooling and main cooling gas turbines in the system in order to boost the available power. This solution consumes cooling duty from the pre-cooling refrigerant circuit, which can thus not be used to pre-cool the natural gas stream and main refrigerant.

Thus, in accordance with US Patent No. 6,324,867, at higher than design ambient conditions, a portion of the total available cooling capacity from the pre-cooling refrigerant circuit is dedicated to the inlet air cooling of one or more of the gas turbines. In order for such cooling capacity to be available at higher than design ambient conditions when compressor volumetric flow decreases, the pre-cooling refrigerant circuit must be designed to provide such excess cooling capacity. This excess cooling capacity at higher than average design conditions would correspond to a significant overcapacity at ambient design conditions when compressor volumetric flow and gas turbine driver power would be greater. This leads to an inefficient liquefaction process in which the pre-cooling circuit capacity is underused at design ambient conditions. Increasing the pre-cooling circuit capacity to provide cooling duty for the air inlet of a gas turbine may require CAPEX increases, such as in the sizes of - the pre-cooling refrigerant compressors themselves, and associated equipment such as ambient coolers - in addition to increased power requirements.

In a first aspect, the present invention provides a method A method of cooling a hydrocarbon stream to produce an at least partially, preferably fully, liquefied hydrocarbon stream, comprising at least the steps of:
(a) cooling a compressed pre-cooling refrigerant stream comprising a pre-cooling refrigerant in one or more pre-cooling ambient coolers to provide a cooled pre-cooling refrigerant stream;
(b) cooling a cooled main refrigerant stream against at least a part of one or more expanded cooled pre-cooling refrigerant streams, said expanded pre-cooling refrigerant stream derived from the cooled pre-cooling refrigerant stream to provide a pre-cooled main refrigerant stream and one or more pre-cooling refrigerant streams, wherein said pre-cooling refrigerant is circulated in a pre-cooling refrigerant circuit;
(c) at least partially, preferably fully, liquefying a hydrocarbon stream in one or more main heat exchangers against an expanded cooled main refrigerant stream, said expanded cooled main refrigerant stream derived from the pre-cooled main refrigerant stream, to provide an at least partially, preferably fully, liquefied hydrocarbon stream and a main refrigerant stream, wherein said main refrigerant is circulated in a main refrigerant circuit;
(d) cooling an air inlet stream of a first gas turbine using cooling duty from the main refrigerant in the main refrigerant circuit to provide a cooled air inlet stream to the first gas turbine; and
(e) driving a first compressor with the first gas turbine.

In a further aspect, the present invention provides an apparatus for at least partially, preferably fully, liquefying a hydrocarbon stream comprising at least:
- a pre-cooling refrigerant circuit comprising:
   one or more pre-cooling heat exchangers to cool a cooled main refrigerant stream against a pre-cooling refrigerant in at least a part of one or more expanded cooled pre-cooling refrigerant streams to provide a pre-cooled main refrigerant stream and one or more pre-cooling refrigerant streams, one or more pre-cooling compressors to compress the one or more pre-cooling refrigerant streams to provide a compressed pre-cooling refrigerant stream, one or more pre-cooling ambient coolers to cool the compressed main refrigerant stream to provide a cooled pre-cooling refrigerant stream, and one or more pre-cooling expansion devices to expand the cooled pre-cooling refrigerant stream to provide the expanded cooled pre-cooling refrigerant stream; and
- a main refrigerant circuit comprising:
   one or more main heat exchangers to:
      at least partially, preferably fully, liquefy a hydrocarbon stream against a main refrigerant in at least a part of one or more expanded cooled main refrigerant streams to provide an at least partially, preferably fully, liquefied hydrocarbon stream and one or more main refrigerant streams, one or more main compressors to compress the one or more main refrigerant streams, or a stream derived therefrom, to provide a compressed main refrigerant stream, one or more main ambient coolers to cool the compressed main refrigerant stream to provide the cooled main refrigerant stream, and one or more main expansion devices to expand the pre-cooled main refrigerant stream, or a stream derived therefrom, to provide the expanded cooled main refrigerant stream;
- a first gas turbibe having a first air inlet stream; and
- cooling means to cool the first air inlet stream using cooling duty from the main refrigerant in the main refrigerant circuit.

Embodiments of the present invention will now be described by way of example only, and with reference to the accompanying non-limiting drawings in which:
Figure 1 shows a first embodiment of a typical process scheme according to the method and apparatus of the invention.
Figure 2 shows a second embodiment of a typical process scheme according to the method and apparatus of the invention.
Figure 3 shows a third embodiment of a typical process scheme according to the method and apparatus of the invention.
Figure 4 shows a comparison of the LNG production, for a process scheme having air inlet cooling by the main refrigerant from the main cryogenic heat exchanger, 1, and air inlet cooling by the main refrigerant drawn before the gas/liquid pressure separator, 2, compared to no air inlet cooling, A, and air inlet cooling by the pre-cooling refrigerant, B.

For the purpose of this description, a single reference number will be assigned to a line as well as a stream carried in that line. The same reference numbers refer to similar components, streams or lines.

In the method and apparatus disclosed herein, a portion of the cooling duty from the main refrigerant circuit which is present to at least partially, preferably fully, liquefy a hydrocarbon stream in a liquefaction unit is used to cool the air inlet stream of a gas turbine driving a compressor, thereby improving the operating efficiency of the turbine, particularly under high ambient temperature conditions. This will in turn lead to improved compressor performance.

The present invention provides an alternative method and apparatus which addresses the problems associated with providing a pre-cooling refrigerant circuit having unused cooling capacity at ambient design conditions. Rather than utilising cooling duty from the pre-cooling refrigerant circuit to cool the air inlet of a gas turbine at temperatures higher than design ambient, the present invention utilises unused cooling duty from the main refrigerant circuit. This does not require an increase in the design capacity of the pre-cooling refrigerant circuit beyond that necessary to pre-cool the natural gas and main refrigerant at design conditions, allowing a pre-cooling refrigerant circuit to be provided which can be fully loaded for liquefaction operation at design ambient conditions.

In a preferred embodiment, the air inlet stream to the first gas turbine can be cooled with the cooling duty from the main refrigerant drawn as a slipstream from the main refrigerant circuit after it has been pre-cooled against the pre-cooling refrigerant. In those cases where the main refrigerant is a mixed refrigerant, the main refrigerant can be drawn off prior to separation into light and heavy mixed main refrigerant fractions in a gas/liquid separation device.

This method is particularly advantageous because it can provide a significant increase in liquefied hydrocarbon production, compared to the method of US Patent No. 6,324,867 in which the gas turbine air inlet stream cooling duty is provided by the propane pre-cooling refrigerant circuit.

Although not wishing to be bound by theory, it is believed that an increase in at least partially liquefied hydrocarbon production is achieved for the following reasons. A liquefaction facility is designed to provide an optimum power balance between the power requirements of the pre-cooling refrigerant stage and the power requirements of the main refrigerant stage. For example, a liquefaction facility with a propane refrigerant pre-cooling circuit and a mixed refrigerant main cooling circuit can be optimised to have a 1:2 pre-cooling stage: main cooling stage power ratio for average ambient conditions.

The liquefaction facility can be designed to cool the hydrocarbon to a fixed temperature by the pre-cooling stage, before it is passed for at least partial liquefaction by the main cooling stage. This fixed temperature is known as the crossover or cut temperature. After compression, the main refrigerant is initially cooled against ambient, typically by air or water, and then further cooled against the propane refrigerant in the pre-cooling stage. This further cooling may at least partially condense the main refrigerant depending upon the main refrigerant composition. Thus, even if the higher ambient conditions result in lower initial cooling of the main refrigerant against ambient, the pre-cooling cycle will provide the additional required cooling to make up the deficit.

At ambient conditions higher than the average design conditions, the pre-cooling stage requires more power because of the higher pre-cooling compressor discharge pressure, and because additional cooling must be provided to at least partially condense the main refrigerant in the main refrigerant stage.

Above the average ambient design conditions, the production of at least partially, preferably fully, liquefied hydrocarbon, such as LNG, is therefore limited to the power available in the pre-cooling refrigerant stage. However, the main refrigerant stage power required to meet the pre-cooling stage throughput reduces significantly under such conditions. This means that the remaining available power, and therefore cooling duty, in the main refrigerant stage which is no longer required for the hydrocarbon liquefaction can be used to cool the air inlet for the gas turbine. This leads to an increase in the performance of the compressor driven by the inlet cooled gas turbine. Where the compressor is in the pre-cooling and/or main refrigerant cycles, this can result in an increase in at least partially liquefied hydrocarbon production compared to the case in which the cooling duty of the pre-cooling refrigerant stage, which is limiting on the liquefied hydrocarbon output, is used to cool the air inlet stream of a gas turbine.

In this way, air inlet cooling of a gas turbine using cooling duty from the main cooling circuit, can be provided without having to increase the design capacity of the pre-cooling or main refrigerant circuits. Thus, the method and apparatus of the present invention can be advantageously applied to already existing facilities, because a change in the refrigerant circuit design cooling capacity is not required.

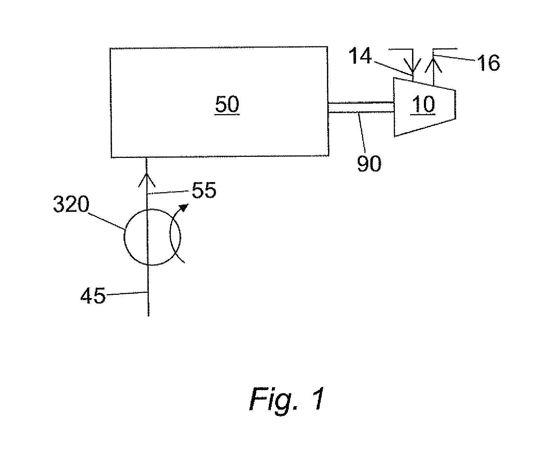

Figure 1 shows a first embodiment of a process scheme according to the method described herein. A first gas turbine 50, such as an aeroderivative or heavy (industrial) gas turbine is shown driving a first compressor 10, by first shaft 90. First compressor 10 has a first suction stream 14 and a first discharge stream 16, the latter of which is at a higher pressure than the first suction stream 14.

Examples of aeroderivative gas turbines which can be used with the present method and apparatus include the Rolls Royce Trent 60 and General Electric LMS100^{™}, LM6000 and LM2500 turbines. Examples of industrial gas turbines which can be used with the present method include the General Electric Frame 6, 7 and 9 turbines.

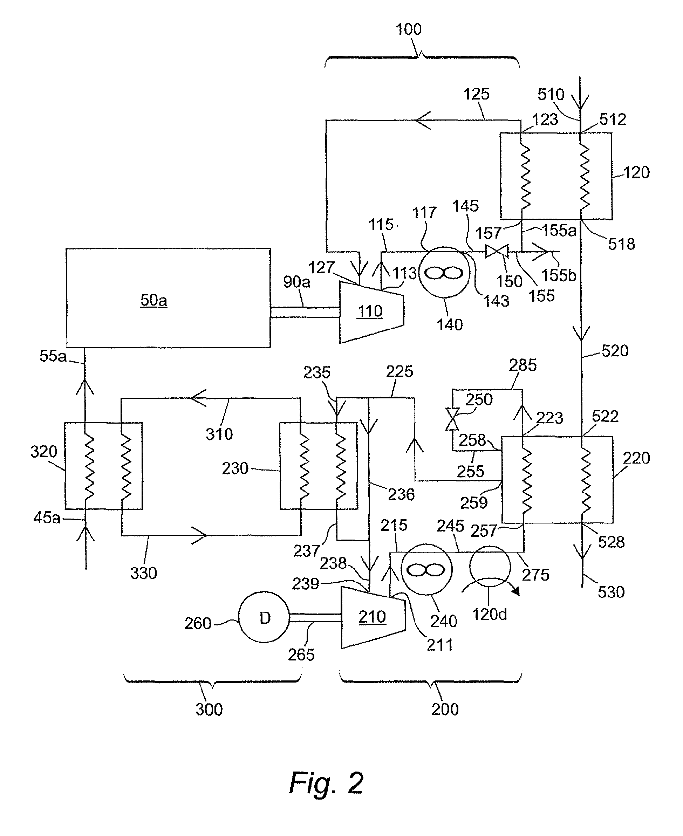

In a preferred embodiment, the first gas turbine 50 is a pre-cooling gas turbine and the first compressor 10 is a pre-cooling compressor for pre-cooling refrigerant in a pre-cooling refrigerant circuit. In a further preferred embodiment, the first gas turbine 50 is a main cooling gas turbine and the first compressor 10 is a main cooling compressor for a main cooling refrigerant in a main cooling refrigerant circuit. Such embodiments are discussed in greater detail in relation to Figures 2 and

In all embodiments disclosed herein, the pre-cooling refrigerant may be a mixed refrigerant or a single component refrigerant. It may comprise one or more of, or essentially consist of, a hydrocarbon selected from the group consisting of: ethane, ethylene, propane, propylene, n-butane, i-butane, and butylenes. Suitably, the pre-cooling refrigerant essentially consists of propane. The main refrigerant in the main refrigerant circuit 200 may be a mixed refrigerant.

The construction of first gas turbine 50 is known to the skilled person. For instance, first gas turbine 50 may comprise a first compression stage, a first combustion chamber, and a first expansion stage, with the first compression stage and first expansion stage being mechanically linked by one or more internal shafts.

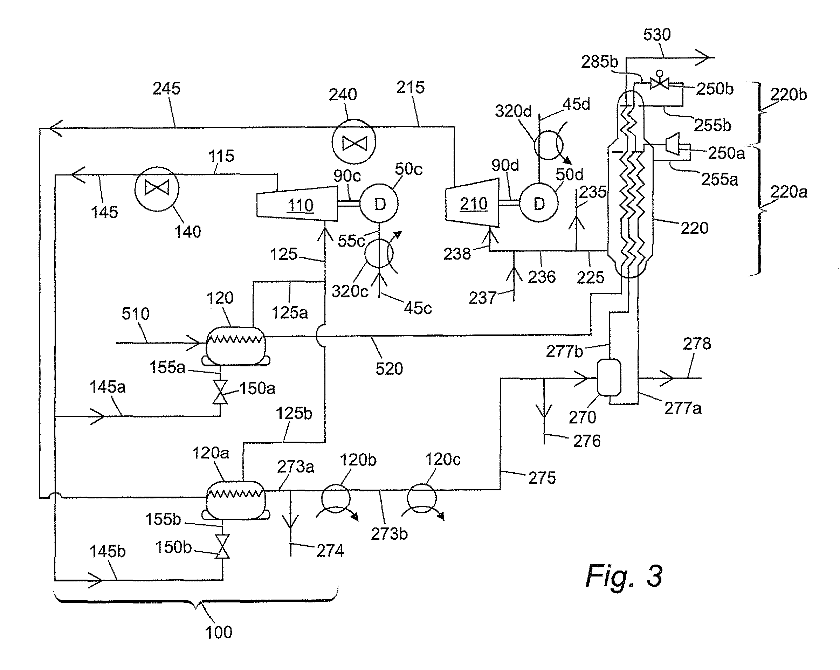

In the method and apparatus disclosed herein, an air inlet stream 45 is passed to an inlet cooler 320, where it is cooled using the cooling duty from a main refrigerant in a main refrigerant circuit, which is itself pre-cooled by a pre-cooling refrigerant. In a preferred embodiment, the main refrigerant is cooled to a specific set point temperature, also called the crossover temperature, by the pre-cooling refrigerant. For simplicity, the main refrigerant circuit is not shown in Figure 1, but is discussed in more detail below, particularly in relation to Figures 2 and 3.

The inlet cooler 320 reduces the temperature of the air inlet stream 45 to provide a cooled air inlet stream 55 which is passed to the first compression stage of the first gas turbine 50. Moisture that may develop during the cooling of the air may be caught in a separator (not shown), such as a vertical vane type separator, that may optionally be installed in the cooled air stream(s). Drain facilities (not shown) may be optionally provided at the separator and cooling facilities to remove the moisture.

As already discussed, the shaft power of gas turbines, and particularly aeroderivative gas turbines, is strongly influenced by the ambient temperature. As the ambient temperature increases, the temperature of the air inlet stream 45 increases. In the absence of air inlet cooling, the relative power output decreases because of a decrease in the density of the air mass passed to the first compression stage. This effect is more pronounced in aeroderivative gas turbines compared to heavy (industrial) gas turbines. However, the method described herein is beneficial for all gas turbine types.

The pressure of the cooled air inlet stream 55 is increased in the first compression stage to provide a compressed air stream. By cooling the air inlet stream 45, the density of the stream is increased, such that the mass flow to the compressor blades or cylinders of first compression stage is increased, improving the power output of the first gas turbine 50. In this way, the reduction in the power output of a gas turbine can be mitigated during increasing ambient temperature conditions. This is particularly beneficial in aeroderivative gas turbines, which may not possess starter/ helper motors because of their potential to operate at variable speeds. If present, such starter/ helper motors can be used to make up any loss in power output suffered by the gas turbine with increasing ambient temperature.

Figures 2 and 3 show further embodiments of process schemes according to methods and apparatus described herein. In particular, these Figures provide schematic examples of suitable refrigeration circuits, especially for the supply of the cooling duty to the inlet cooler of the air inlet stream of the gas turbine.

Figure 2 shows a method and apparatus described herein applied to the production of an at least partially, preferably fully liquefied hydrocarbon stream 530, such as a Liquefied Natural Gas (LNG) stream, from a hydrocarbon feed stream 510, such as a natural gas stream.

The method and apparatus disclosed herein may involve at least two cooling stages, each stage having one or more steps, parts etc.. For example, each cooling stage may comprise one to five heat exchangers. The or a fraction of a hydrocarbon stream and/or the refrigerant may not pass through all, and/or all of the same, heat exchangers of a cooling stage.

In the embodiment of Figure 2, the hydrocarbon liquefying process comprises two cooling stages. A first cooling stage is preferably intended to reduce the temperature of a hydrocarbon feed stream 510 to below 0 °C to provide a hydrocarbon stream 520. Such a first cooling stage is termed a 'pre-cooling' stage or cycle herein. A second or 'main cooling' stage then further cools and preferably liquefies the hydrocarbon stream 520, preferably to a temperature below -100 °C, more preferably below -150 °C to provide a liquefied hydrocarbon stream 530.

The hydrocarbon feed stream 510 may be any suitable gas stream to be cooled and at least partially liquefied, but is usually a natural gas stream obtained from natural gas or petroleum reservoirs. As an alternative the hydrocarbon feed stream 510 may also be obtained from another source, also including a synthetic source such as a Fischer-Tropsch process.

When the hydrocarbon feed stream 510 is a natural gas stream, it is usually comprised substantially of methane. Preferably the hydrocarbon feed stream 510 comprises at least 50 mol% methane, more preferably at least 80 mol% methane.

Depending on the source, natural gas may contain varying amounts of hydrocarbons heavier than methane such as in particular ethane, propane and the butanes, and possibly lesser amounts of pentanes and aromatic hydrocarbons. The composition varies depending upon the type and location of the gas.

Conventionally, the hydrocarbons heavier than methane are removed as far as efficiently possible from the natural gas prior to any significant cooling for several reasons, such as having different freezing or liquefaction temperatures that may cause them to block parts of a methane liquefaction plant.

The natural gas may also contain non-hydrocarbons such as H₂O, N₂, CO₂, Hg, H₂S and other sulphur compounds, and the like.

Thus, if desired, the hydrocarbon feed stream 510 comprising the natural gas may be pre-treated before cooling and at least partial liquefaction. This pretreatment may comprise reduction and/or removal of undesired components such as CO₂ and H₂S or other steps such as early cooling, pre-pressurizing or the like. As these steps are well known to the person skilled in the art, their mechanisms are not further discussed here.

Thus, the term "hydrocarbon feed stream" also includes a composition prior to any treatment, such treatment including cleaning, dehydration and/or scrubbing, as well as any composition having been partly, substantially or wholly treated for the reduction and/or removal of one or more compounds or substances, including but not limited to sulphur, sulphur compounds, carbon dioxide, water, Hg, and one or more C₂₊ hydrocarbons.

To provide an at least partially, preferably fully, liquefied hydrocarbon stream, a hydrocarbon feed stream 510 is cooled. Initial cooling is provided by passing the hydrocarbon feed stream 510 against a pre-cooling refrigerant, such as a C2-C4 hydrocarbon, preferably propane, in a pre-cooling refrigerant circuit 100, in one or more pre-cooling heat exchangers 120, 120d, to provide a hydrocarbon stream 520, which is cooled, optionally partially liquefied, for example at a temperature below 0 °C, usually in the range -20 °C to -70 °C.

The pre-cooling refrigerant circuit 100 comprises one or more pre-cooling compressors 110. A pre-cooling compressor 110 comprises a first inlet 127 for a pre-cooling refrigerant stream 125 and a first outlet 113 for a compressed pre-cooling refrigerant stream 115. These pre-cooling compressors 110 can be driven by one or more pre-cooling drivers, which are preferably first gas turbines 50a in which the air inlet stream 45a is cooled by cooling duty from a main refrigerant in a main refrigerant circuit. The first gas turbine 50a can thus be a pre-cooling gas turbine.

At higher ambient conditions, the discharge pressure of the pre-cooling compressor 110 will be higher because of the higher pre-cooling refrigerant condensing temperature. Conventionally a compressor is designed for operation at average ambient conditions with a fixed flow/head curve. At a higher discharge pressure, the pre-cooling refrigerant pressure levels increase in pressure.

For instance, in an embodiment in which there are multiple pre-cooling heat exchangers 120 in series, for example four pre-cooling heat exchangers at high high pressure, high pressure, medium pressure and low pressure with intermediate pressure let-down of the pre-cooling refrigerant, all the pre-cooling refrigerant pressure levels will increase even if there is only a relatively small head variation. Higher pre-cooling refrigerant pressure levels will lead to a corresponding reduction in the volumetric flow in the pre-cooling compressor.

Similarly, in an alternative embodiment (not shown) there may be multiple pre-cooling heat exchangers in parallel. Again, higher pre-cooling refrigerant pressure levels will lead to a corresponding reduction in the volumetric flow in the pre-cooling compressor.

Unless mitigating steps are taken, this reduction in pre-cooling refrigerant volumetric flow will result in a decrease in the at least partially liquefied hydrocarbon production. In order to counter this, one possible solution is to increase the power output of the compressor drivers. However, increases in ambient temperatures above the average design temperature leads to a reduction in the power output of the gas turbine driving the pre-cooling compressor. Consequently, the mass flow of the pre-cooling refrigerant in the pre-cooling circuit reduces, leading to a further reduction in volumetric flow. These two effects combined can move the pre-cooling compressor towards surge as the ambient temperature rises above the average temperature design conditions. The pre-cooling compressor may then go into recycle mode to avoid surge, reducing the effective power input still further. In the worst case, operation of the pre-cooling refrigerant circuit may be disabled entirely.

The method and apparatus described herein addresses the problem of power loss in the pre-cooling gas turbine driver by cooling the pre-cooling turbine air inlet stream 45a to the pre-cooling gas turbine 50a with an air inlet cooler 320 to provide a pre-cooling turbine cooled air inlet stream 55a.

The pre-cooling gas turbine 50a comprises identical components to the first gas turbine 50 discussed in relation to Figure 1. In order to distinguish the components between the drawings, a suffix "a" has been added to the reference numerals. The pre-cooling turbine 50a comprises a pre-cooling turbine air inlet stream 45a.

Returning to the pre-cooling refrigerant circuit 100, the compressed pre-cooling refrigerant stream 115 from the discharge of the pre-cooling compressor 110 is passed to the first inlet 117 of one or more pre-cooling ambient coolers 140, such as air or water coolers. The pre-cooling ambient coolers 140 cool, preferably partially liquefy and more preferably fully liquefy the compressed pre-cooling refrigerant stream 115 to remove the heat of compression and provide a cooled pre-cooling refrigerant stream 145 at a first outlet 143.

The cooled pre-cooling refrigerant stream 145, or a part thereof, is then passed through one or more pre-cooling expansion devices 150, such as a Joule-Thomson valve or a turboexpander, to provide one or more expanded cooled pre-cooling refrigerant streams 155. At least a part of the expanded cooled pre-cooling refrigerant stream a is passed to a first inlet 157 of a pre-cooling heat exchanger 120, where it cools the hydrocarbon feed stream 510 which enters the pre-cooling heat exchanger 120 at second inlet 512, to provide hydrocarbon stream 520 at first outlet 518 and the pre-cooling refrigerant stream 125 at second outlet 123.

The hydrocarbon stream 520 is then passed to a first inlet 522 of one or more main heat exchangers 220 where it is further cooled and at least partially, preferably fully, liquefied against a main refrigerant in a main refrigerant circuit 200 to provide the at least partially, preferably fully, liquefied hydrocarbon stream 530 at first outlet 528.

The main refrigerant circuit 200 is preferably separate from the pre-cooling refrigerant circuit 100, but need not be. Thus, the main refrigerant circuit 200 can comprise one or more main heat exchangers 220, which are separate from the pre-cooling heat exchangers 120.

The main cooling circuit 200 is preferably intended to reduce the temperature of the hydrocarbon stream 520, usually at least a fraction of a hydrocarbon stream cooled by the pre-cooling cooling stage, to below -100 °C, more preferably below -120 °C, even more preferably below -150 °C.

Heat exchangers for use as the one or more pre-cooling heat exchangers 120 or the one or more main heat exchangers 220 are well known in the art. At least one of the main heat exchangers 220 is preferably a spool-wound cryogenic heat exchanger known in the art. Optionally, a heat exchanger could comprise one or more cooling sections within its shell, and each cooling section could be considered as a cooling stage or as a separate 'heat exchanger' to the other cooling locations.

The main refrigerant in the main refrigerant circuit 200 is preferably a mixed refrigerant. A mixed refrigerant or a mixed refrigerant stream as referred to herein comprises at least 5 mol% of two different components. A common composition for a mixed refrigerant can be:

| | |
|---|---|
| Nitrogen | 0-10 mol% |
| Methane (C1) | 30-70 mol% |
| Ethane (C2) | 30-70 mol% |
| Propane (C3) | 0-30 mol% |
| Butanes (C4) | 0-15 mol% |

The total composition comprises 100 mol%. The mixed refrigerant of the main refrigerant circuit 200 may be formed from a mixture of two or more components selected from the group comprising: nitrogen, methane, ethane, ethylene, propane, propylene, butanes, etc.. The method and apparatus disclosed herein may further involve the use of one or more other refrigerants, in separate or overlapping refrigerant circuits or other cooling circuits.

The main refrigerant circuit 200 comprises a main refrigerant compressor feed stream 238, which is passed to the inlet 209 of one of the one or more main refrigerant compressors 210. The main refrigerant compressor 210 is mechanically driven by a main compressor driver 260, via main compressor shaft 265. The main compressor driver 260 can be any conventional driver, such as an electric driver or a gas turbine.

In an embodiment not shown in Figure 2, main compressor driver 260 could be a gas turbine with air inlet cooling according to the method disclosed herein.

The main refrigerant compressor 210 compresses the main refrigerant compressor feed stream 238 to provide a compressed main refrigerant stream 215 at the outlet 211. The compressed main refrigerant stream 215 is then cooled in one or more main ambient coolers 240, such as air or water coolers, to provide a cooled main refrigerant stream 245.

In yet another embodiment disclosed herein, the main refrigerant can be passed through one or more heat exchangers, preferably two or more of the pre-cooling 120 and main heat exchangers 220 described hereinabove, to provide one or more cooled main refrigerant streams.

In a preferred embodiment shown in Figure 2, the cooled main refrigerant stream 245 is further cooled in one or more of the pre-cooling heat exchangers 120d in the pre-cooling refrigerant circuit 100, against a part of the expanded cooled pre-cooling refrigerant stream 155b, to provide a pre-cooled main refrigerant stream 275. The pre-cooled main refrigerant stream 275 may be an at least partly or fully liquefied stream. In a preferred embodiment, at least a part of the expanded pre-cooling refrigerant stream cools the cooled main refrigerant stream 245 to a specific temperature, the crossover or cut-off temperature, such that the pre-cooled main refrigerant stream 275 is provided at a specific temperature.

In a further embodiment, a pre-cooling heat exchanger 120 can cool both the cooled main refrigerant stream 245 and the hydrocarbon feed stream 510 against at least a part of the expanded cooled pre-cooling refrigerant stream 155, such that the pre-cooling heat exchanger 120 shown in the pre-cooling refrigerant circuit 100 is the same pre-cooling heat exchanger 120d in the main refrigerant circuit 200. An example of a different line-up where different pre-cooling heat exchangers are used to cool the hydrocarbon feed stream and cooled main refrigerant stream is provided in Figure 3 discussed below.

The pre-cooled main refrigerant stream 275 is then passed to the second inlet 257 of the main heat exchanger 220 where it can be cooled against itself. For example, when the main heat exchanger 220 is a shell and tube heat exchanger the pre-cooled main refrigerant stream 275 can be passed along one or more tubes and cooled against main refrigerant on the shell side to provide a further cooled main refrigerant stream 285 at the second outlet 223 of the main heat exchanger 220. The further cooled main refrigerant stream 285 can then be expanded in a main cooling expansion device 250, such as a Joule-Thomson valve or turboexpander, to provide an expanded cooled main refrigerant stream 255 which can then be passed to a third inlet 258 of the main heat exchanger 220 to cool the pre-cooled main refrigerant stream 275 and at least partially liquefy the hydrocarbon stream 520. In a preferred embodiment, the expanded cooled main refrigerant stream 255 can be passed to the shell side of the main heat exchanger 220.

In cooling the pre-cooled main refrigerant stream 275 and at least partially liquefying the hydrocarbon stream 520, the expanded cooled main refrigerant stream 255 is warmed and may be at least partially evaporated. The warmed main refrigerant leaves the main heat exchanger by third outlet 259 as main refrigerant stream 225. At least a part 236 of the main refrigerant stream 225 can be passed to the main compressor 210, while a further part 235 can be passed to one or more intermediate heat exchangers 230, where at least a portion of the cooling duty of the main refrigerant circuit 200 can be removed to cool the air inlet stream 45a of the first gas turbine 50a.

It is preferred that the main refrigerant does not directly cool the air inlet stream 45a. Indirect cooling is preferred. In order to avoid the possibility of the main refrigerant coming into contact with the air inlet stream 45a, for example due to leaks in any of the conveying pipe work, it is still more preferred to utilise an intermediate thermal transfer circuit 300 to conduct the cold energy to the air inlet stream 45a. The thermal transfer circuit 300 transfers the cold from the main refrigerant in the main refrigerant circuit 200 to the air inlet stream 45a, and keeps the main refrigerant entirely separate and at a distance from the air inlet stream 45a.

At least a part of the main refrigerant stream 225 can be passed to one or more intermediate heat exchangers 230, as cooling main refrigerant stream 235, where it is used to cool a thermal transfer fluid in a thermal transfer fluid stream 330, to provide a cooled thermal transfer fluid stream 310 and a return main refrigerant stream 237. Return main refrigerant stream 237 can then be combined with the part 236 of the main refrigerant stream 225 not used to cool the thermal transfer fluid to provide main refrigerant compressor feed stream 238 which is passed to the suction side of the main compressor 210.

The thermal transfer fluid is preferably selected from one or more of the group comprising water and a glycol, such as monoethylene glycol.

The cooled thermal transfer fluid stream 310 can then be passed to one or more inlet heat exchangers 320, such as cooling coils in the path of the air inlet stream 45a. The inlet heat exchanger 320 cools the air inlet stream 45a to provide a cooled air inlet stream 55a to the first compression stage of the pre-cooling gas turbine 50a, and regenerate the thermal transfer fluid stream 330, which can be returned to the intermediate heat exchanger 230.

It is preferred that the air inlet stream 45a is cooled such that the temperature of the cooled air inlet stream 55a is below 30 °C, more preferably below 25 °C, even more preferably below 20 °C. It is also preferred that the air inlet stream 45a is not cooled below the freezing temperature of water, in order to avoid the freezing of any water vapour or liquid in the air inlet stream 45a. For example, it is preferred that the air inlet stream 45a is not cooled below 5 °C.

Figure 3 provides a more detailed scheme of a hydrocarbon liquefying process. As with Figure 2, there is provided a hydrocarbon feed stream 510, such as natural gas, which may have been pre-treated to reduce and/or remove at least some of the non-hydrocarbons, and optionally some of the hydrocarbons heavier than methane as discussed hereinabove.

The hydrocarbon feed stream 510 passes through a first pre-cooling heat exchanger 120, which may comprise one or more heat exchangers in series, parallel, or both, in a manner known in the art to provide hydrocarbon stream 520 which is cooled and preferably partially liquefied.

The cooling in the pre-cooling exchanger 120 is provided by a pre-cooling refrigerant, such as propane, in a first part 155a of an expanded cooled pre-cooling refrigerant stream 155. In the scheme shown in Figure 3, the pre-cooling refrigerant is shown passing into the bottom or lower part of the first pre-cooling heat exchanger 120, which can be a shell and tube heat exchanger. After providing its cooling in the first pre-cooling heat exchanger 120, the pre-cooling refrigerant can be least partly evaporated, usually fully evaporated, and exits the first pre-cooling heat exchanger 120 at or near the top as first part 125a of pre-cooling refrigerant stream 125.

First part 125a of pre-cooling refrigerant stream 125 is passed to the inlet of pre-cooling compressor 110, which is mechanically driven by driver 50c via pre-cooling shaft 90c. Driver 50c is preferably a pre-cooling gas turbine. The pre-cooling gas turbine 50c can have an air inlet stream 45c, which is desirably passed to a pre-cooling inlet heat exchanger 320c, where it is cooled using cooling duty from the main refrigerant circuit 200.

The pre-cooling compressor 110 provides a compressed pre-cooling refrigerant stream 115, which is cooled in pre-cooling cooler 140 to provide a cooled pre-cooling refrigerant stream 145. The cooled pre-cooling refrigerant stream 145 is passed to pre-cooling expansion device 150, in which it is expanded to provide expanded cooled pre-cooling refrigerant stream 155. The expanded cooled pre-cooling refrigerant stream 155 can be split into first and second parts, 155a, 155b respectively. The first part 155a can be passed to the first pre-cooling heat exchanger 120 to cool the hydrocarbon feed stream 510 to provide hydrocarbon stream 520.

The hydrocarbon stream 520 is cooled and at least partially, preferably fully, liquefied in main heat exchanger 220. Main heat exchanger 220 has two sections, a lower section 220a, and an upper section 220b. These are shown in Figure 3 as a lower main heat exchanger 220a and an upper main heat exchanger 220b. The arrangement of two or more heat exchangers as sections in a, for example cryogenic, heat exchanger are known in the art, and are not further discussed herein.

After the hydrocarbon stream 520, which is cooled and preferably partially liquefied, is passed through the main heat exchangers 220a, 220b, there is provided an at least partially, preferably fully, liquefied hydrocarbon stream 530. Cooling of the hydrocarbon stream 520 in the main upper and lower heat exchangers 220a, 220b is provided by two fractions of the main refrigerant, which is a mixed refrigerant, which fractions enter the main heat exchanger 220 at different locations, so as to provide the different heat-exchanging sections within the main heat exchanger 220 in a manner known in the art. At or near the base of the lower main heat exchanger 220a, the mixed refrigerant after its use can be collected as main refrigerant stream 225, which can be an at least partly evaporated mixed refrigerant stream, which can pass through a refrigerant gas/liquid separator, such as a knock-out drum (not shown) and on to main compressor 210 as a main refrigerant compressor feed stream 238.

Main compressor 210 is mechanically driven by main driver 50d via main shaft 90d. Main driver 50d can be a main gas turbine. The main gas turbine 50d can have an air inlet stream 45d, which, in a preferred embodiment disclosed herein, is passed to a main inlet cooler 320d, where it is cooled using cooling duty from the main refrigerant circuit 200.

The main refrigerant compressor feed stream 238 is compressed by main compressor 210 to provide compressed main refrigerant stream 215 and cooled by a main cooler 240 to provide cooled main refrigerant stream 245. The cooled main refrigerant stream 245 can be passed through one or more pre-cooling heat exchangers 120a, b, c. Where there are more than two pre-cooling heat exchangers 120, such as 3, 4 or 5 of such heat exchangers, one or both of the hydrocarbon feed stream 510, and the cooled main refrigerant stream 245, may not pass through all of these pre-cooling heat exchangers 120, but may be selected to pass through certain of the pre-cooling heat exchangers 120 to provide a particular arrangement of cooling to the two streams. Figure 3 shows the hydrocarbon feed stream 510 passing through a first pre-cooling heat exchanger 120, while the cooled main refrigerant stream 245 is passed through three different pre-cooling heat exchangers, namely second, third and fourth pre-cooling heat exchangers 120a, 120b, 120c.

The hydrocarbon feed stream 510 and cooled main refrigerant stream 245 are cooled against first and second parts 145a, 145b of the cooled pre-cooling refrigerant stream 145 after expansion in first and second pre-cooling expansion devices 150a, b respectively. First and second pre-cooling expansion devices 150a, b provide first and second expanded cooled pre-cooling refrigerant streams 155a, 155b, which can be heat exchanged in the first pre-cooling heat exchanger 120 and second pre-cooling heat exchanger 120a respectively. In doing so, the pre-cooling refrigerant is warmed in the pre-cooling heat exchangers 120, 120a to provide first and second parts 125a, 125b of a pre-cooling refrigerant stream respectively, which can then be combined to provide pre-cooling refrigerant stream 125 and passed to the suction side of pre-cooling compressor 110. For simplicity, the provision of the pre-cooling refrigerant, for instance after appropriate pressure reduction, to the third and fourth pre-cooling heat exchangers 120b, 120c is not shown in Figure 3. Such a line-up is known in the art.

Thus, the cooled main refrigerant stream 245 is further cooled by its sequential passage through the three pre-cooling heat exchangers 120a, b, c to provide, in order, a first and a second intermediate pre-cooled main refrigerant stream 273a and 273b prior to the provision of the pre-cooled main refrigerant stream 275 after the fourth pre-cooling heat exchanger 120c. Pre-cooled main refrigerant stream 275 is preferably provided at a predetermined cross over or cut-off temperature, which can be passed to a main gas/liquid separator 270 to provide an overhead gaseous stream 277b and a liquid bottom stream 277a.

The overhead gaseous stream 277b from the main gas/liquid separator 270, commonly also termed a light mixed refrigerant stream (LMR), passes through the main heat exchanger 220 to provide an upper further cooled main refrigerant stream 285b, which passes through an expansion device, such as upper valve 250b to provide an upper expanded cooled main refrigerant stream 255b for cooling in the upper main heat exchanger 220b in a manner known in the art.

The liquid bottom stream 277a from the main gas/liquid separator 270, commonly also termed a heavy mixed refrigerant stream (HMR), passes through the lower main heat exchanger 220a to provide a lower further cooled main refrigerant stream 285a, which passes through an expansion device, such as lower valve 250a to provide a lower expanded cooled main refrigerant stream 255a for cooling in the lower main heat exchanger 220a in a manner known in the art.

The scheme of Figure 3 illustrates a number of positions where the main refrigerant can be drawn from the main refrigerant circuit 200 to provide cooling duty to the air inlet stream 45c, 45d of the pre-cooling or main gas turbine 50c, 50d respectively.

As discussed for Figure 2, a part (cooling main refrigerant stream ) 235 of main refrigerant stream 225, which can be at a temperature of approximately -30 °C and a pressure in the range of 3.0 to 4.5 bar, can be withdrawn and passed to an intermediate heat exchanger (not shown) to cool a thermal transfer fluid stream in a thermal transfer circuit. The thermal transfer fluid can then be used to cool one or both of the air inlet streams 45c, 45d of the gas turbines. After extraction of the cold energy from the cooling main refrigerant stream 235, the main refrigerant can be passed back as return main refrigerant stream 237, where it is combined with the part 236 of the main refrigerant stream 225 not used to cool the thermal transfer fluid, to provide main refrigerant compressor feed stream 238 which is passed to the main compressor 210.

Alternatively, a part of the intermediate pre-cooled main refrigerant stream 273 can be withdrawn from between two of the pre-cooling heat exchangers 120a, b, c and passed to the intermediate heat exchanger in order to provide cooling duty to one or both of the air inlet streams 45c, 45d of the gas turbines 50c, d. Figure 3 shows a part 274 of first intermediate pre-cooled main refrigerant stream 273a being withdrawn from between the second and third pre-cooling heat exchangers 120a, 120b. After the cooling of the thermal transfer fluid, the main refrigerant can be passed back as return main refrigerant stream 237 after appropriate pressure reduction and passed to the suction side of the main refrigerant compressor 210.

In a yet further alternative, a part 276 of the pre-cooled main refrigerant stream 275 can be withdrawn prior to separation in the main gas/liquid separator 270, expanded and used to cool a thermal transfer fluid stream. For instance, part stream 276 can be expanded to a pressure of approximately 4-4.5 bar providing a temperature of approximately -75 to -80 °C and used to cool the thermal transfer fluid. The cooled thermal transfer fluid can then be used to cool air inlet stream 45c, 45d of the pre-cooling and/or main gas turbine 50c, 50d. After the cooling of the thermal transfer fluid, the main refrigerant can be passed back as return main refrigerant stream 237 after appropriate pressure reduction and provided to the main refrigerant compressor 210.

Furthermore, a part 278 of the bottoms liquid (heavy mixed refrigerant) stream 277a can be withdrawn after separation in the main gas/liquid separator 270, and used to cool the thermal transfer fluid stream. The cooled thermal transfer fluid can then be used to cool air inlet stream 45c, 45d of the pre-cooling and/or main gas turbine 50c, 50d. After the cooling of the thermal transfer fluid, the main refrigerant could be returned to the bottoms liquid stream 277a or passed back as return main refrigerant stream 237 after appropriate pressure reduction.

### Example

The performance of a liquefaction train based upon the scheme of Figure 3 in which air inlet cooling has been applied to the pre-cooling gas turbine 50c has been assessed.

A base case without air inlet cooling in which a single General Electric LMS100^{™} pre-cooling gas turbine was used to drive a pre-cooling compressor in a propane pre-cooling refrigeration circuit and two General Electric LMS100 ^{™} main gas turbines were used to drive a main compressor in a mixed refrigerant main refrigeration circuit was examined for an average ambient (design) temperature of 27 °C. The base case provided a power output from each gas turbine of 76.9 MW at 27 °C, providing LNG production of 6.44 Mtpa when the pre-cooling and main cooling gas turbines were fully loaded with respect to the liquefaction process.

When the ambient temperature is increased to 39 °C, the power output of the pre-cooling gas turbine remained fully loaded while dropping to 66 MW, while the two main gas turbines in the main refrigerant circuit were underloaded at 59 MW. The pre-cooling gas turbine power available is therefore limiting on LNG production. This equates to a drop in LNG production from 6.44 Mtpa at 27 °C under full loading of the gas turbine compressor drivers to 4.35 Mtpa at 39 °C.

In the comparison which follows, the pre-cooling and main cooling gas turbine drivers are designed to be fully loaded with respect to the liquefaction process at average ambient design conditions.

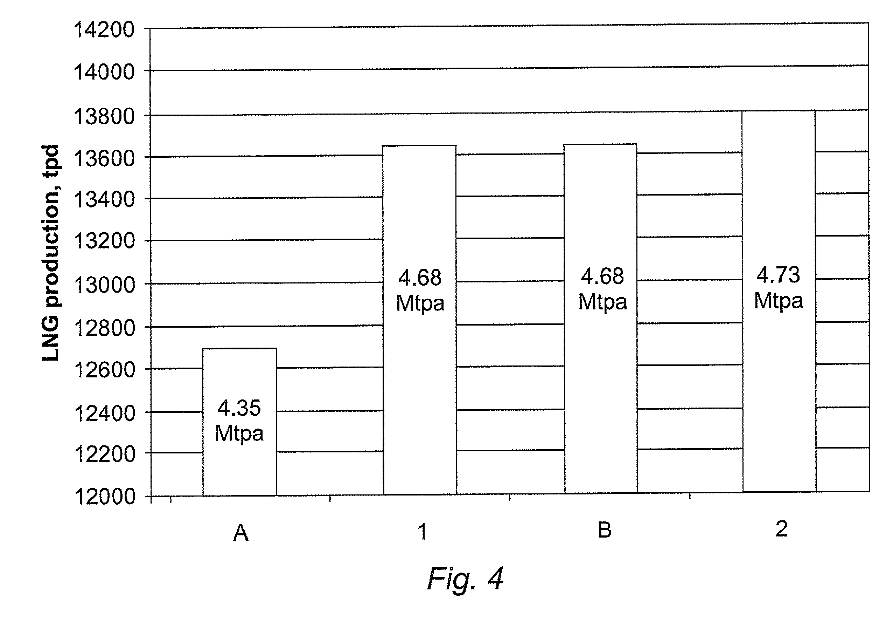

Figure 4 provides a comparison of this base case (A: No Inlet Air Cooling (IAC)) with two embodiments described herein in which air inlet cooling has been applied to the pre-cooling gas turbine using a mixed main refrigerant drawn from two different points in the main refrigerant circuit (1: Inlet Air Cooling by mixed refrigerant from the Main Cryogenic Heat Exchanger; and 2: Inlet Air Cooling by Mixed Refrigerant from before the main gas/liquid separator) and a comparative example (B) in which air inlet cooling has been applied to the pre-cooling gas turbine using the propane pre-cooling refrigerant drawn from the pre-cooling refrigerant circuit according to US Patent No. 6,324,867.

It can be seen from Figure 4, embodiment 1, that drawing mixed main refrigerant from main refrigerant stream 225 as it exits the main heat exchanger 220 (stream 235) provides an increase in LNG production from 4.35 Mtpa (base case A) to 4.68 Mtpa (embodiment 1). This LNG production is comparable to the productivity of 4.68 Mtpa achieved using cooling duty from a propane pre-cooling refrigerant circuit according to US Patent No. 6,324,867 (comparison B) in which the pre-cooling gas turbine driver is designed to be fully loaded with respect to the liquefaction process at average ambient design conditions. Consequently, the provision of cooling duty by the pre-cooling refrigerant circuit to a gas turbine driver air inlet stream at 39 °C in Comparison B would remove available cooling duty from the liquefaction process.

However, a further increase in LNG productivity to 4.73 Mtpa can be achieved by withdrawing main mixed refrigerant from the pre-cooled mixed refrigerant stream 275 prior to separation in the main gas/liquid separator 270 (stream 276).

The person skilled in the art will understand that the present invention can be carried out in many various ways without departing from the scope of the appended claims.

## Claims

1. A method of cooling a hydrocarbon stream (520) to produce an at least partially, preferably fully, liquefied hydrocarbon stream (530), comprising at least the steps of:
(a) cooling a compressed pre-cooling refrigerant stream (115) comprising a pre-cooling refrigerant in one or more pre-cooling ambient coolers (140) to provide a cooled pre-cooling refrigerant stream (145);
(b) cooling a cooled main refrigerant stream (245) against at least a part of one or more expanded cooled pre-cooling refrigerant streams (155), said expanded pre-cooling refrigerant stream (155) derived from the cooled pre-cooling refrigerant stream (145) to provide a pre-cooled main refrigerant stream (275) and one or more pre-cooling refrigerant streams (125), wherein said pre-cooling refrigerant is circulated in a pre-cooling refrigerant circuit (100);
(c) at least partially, preferably fully, liquefying a hydrocarbon stream (520) in one or more main heat exchangers (220) against an expanded cooled main refrigerant stream (255), said expanded cooled main refrigerant stream (255) derived from the pre-cooled main refrigerant stream (275), to provide an at least partially, preferably fully, liquefied hydrocarbon stream (530) and a main refrigerant stream (225), wherein said main refrigerant is circulated in a main refrigerant circuit (200);
(d) cooling an air inlet stream (45) of a first gas turbine (50) using cooling duty from the main refrigerant in the main refrigerant circuit (200) to provide a cooled air inlet stream (55) to the first gas turbine (50); and
(e) driving a first compressor (10, 110, 210) with the first gas turbine (50).

2. The method according to claim 1, wherein step (a) further comprises cooling a hydrocarbon feed stream (510) against at least a part of the expanded cooled pre-cooling refrigerant stream (155) to provide the hydrocarbon stream (520).

3. The method according to any of the preceding claims, wherein the first gas turbine (50) is a pre-cooling gas turbine (50a, 50b) and the first compressor (10) is a pre-cooling compressor (110) in the pre-cooling refrigerant circuit (100).

4. The method according to any one of claims 1 to 2, wherein the first gas turbine (50) is a main cooling gas turbine (50c) and the first compressor is a main compressor (210) in the main refrigerant circuit (200).

5. The method according to any of the proceeding claims wherein the cooling of the air inlet stream (45) of the first gas turbine (50) in step (d) is provided by the further steps of:
- cooling a thermal transfer fluid in a thermal transfer fluid stream (330) against the main refrigerant in the main refrigerant circuit (200) to provide a cooled thermal transfer fluid stream (310); and
- cooling the air inlet stream (45) against the cooled thermal transfer fluid stream (310) to provide the cooled air inlet stream (55) and the thermal transfer fluid stream (330).

6. The method according to claim 5, wherein the thermal transfer fluid is selected from one or more of the group consisting of: water and a glycol.

7. The method according to claim 5 or claim 6, wherein the main refrigerant in the main refrigerant circuit (200) used in the heat exchange with the thermal transfer fluid stream (330) is a portion (235) of the main refrigerant stream (225) drawn from at least one of the main heat exchangers (220).

8. The method according to claim 5 or claim 6, wherein the main refrigerant in the main refrigerant circuit (200) used in the heat exchange with the thermal transfer fluid stream (330) is a portion (276) of the pre-cooled main refrigerant stream (275).

9. The method according to claim 5 or claim 6, wherein the cooling of the cooled main refrigerant stream (245) in step (b) is carried out sequentially in two or more pre-cooling heat exchangers (120) in series and the main refrigerant in the main refrigerant circuit (200) used in the heat exchange with the thermal transfer fluid stream (330) is drawn from between two of said pre-cooling heat exchangers (120).

10. The method according to claim 5 or claim 6, where in the main refrigerant in the main refrigerant circuit (200) used in the heat exchange with the thermal transfer fluid stream (330) is a mixed refrigerant and is provided by the further steps of:
- separating the pre-cooled main refrigerant stream (275) in a main gas/liquid separator (270) to provide an overhead gaseous stream (277b) and a liquid bottom stream (277a); and
- withdrawing a part (278) of the liquid bottom stream (277a) to cool the thermal transfer fluid stream (330).

11. The method according to any one of the preceding claims, wherein the pre-cooling refrigerant circuit (100) comprises one or more pre-cooling compressors (110), one or more pre-cooling heat exchangers (120), one or more pre-cooling ambient coolers (140) and one or more pre-cooling expansion devices (150), and wherein the main refrigerant circuit (200) comprises one or more main compressors (210), one or more main heat exchangers (220), one or more said main ambient coolers (240) and one or more main expansion devices (250).

12. An apparatus for at least partially, preferably fully, liquefying a hydrocarbon stream (520) comprising at least:
- a pre-cooling refrigerant circuit (100) comprising:
one or more pre-cooling heat exchangers (120) to cool a cooled main refrigerant stream (245) against a pre-cooling refrigerant in at least a part of one or more expanded cooled pre-cooling refrigerant streams (155) to provide a pre-cooled main refrigerant stream (275) and one or more pre-cooling refrigerant streams (125),
one or more pre-cooling compressors (110) to compress the one or more pre-cooling refrigerant streams (125) to provide a compressed pre-cooling refrigerant stream (115), one or more pre-cooling ambient coolers (140) to cool the compressed main refrigerant stream (115) to provide a cooled pre-cooling refrigerant stream (145),
and one or more pre-cooling expansion devices (150) to expand the cooled pre-cooling refrigerant stream (145) to provide the expanded cooled pre-cooling refrigerant stream (155); and
- a main refrigerant circuit (200) comprising:
one or more main heat exchangers (220, 230) to:
at least partially, preferably fully, liquefy a hydrocarbon stream (520) against a main refrigerant in at least a part of one or more expanded cooled main refrigerant streams (255) to provide an at least partially, preferably fully, liquefied hydrocarbon stream (530) and one or more main refrigerant streams (225),
one or more main compressors (210) to compress the one or more main refrigerant streams (225), or a stream derived therefrom (238), to provide a compressed main refrigerant stream (215), one or more main ambient coolers (240) to cool the compressed main refrigerant stream (215) to provide the cooled main refrigerant stream (245), and
one or more main expansion devices (250) to expand the pre-cooled main refrigerant stream (275), or a stream derived therefrom (285), to provide the expanded cooled main refrigerant stream (255);
- a first gas turbibe (50) having a first air inlet stream (45); and
- cooling means to cool the first air inlet stream (45) using cooling duty from the main refrigerant in the main refrigerant circuit (200).

13. The apparatus according to claim 12, wherein the pre-cooling refrigerant circuit (100) further cools a hydrocarbon feed stream (510) against a pre-cooling refrigerant in at least a part of one or more expanded cooled pre-cooling refrigerant streams (155) to provide the hydrocarbon stream (520) and one or more pre-cooling refrigerant streams (145).

14. The apparatus according to claim 12 or 13, further comprising one or more pre-cooling gas turbines (50b) arranged to drive said pre-cooling compressors (110), each of said pre-cooling gas turbines (50b) having a pre-cooling turbine air inlet stream (45a), and whereby the first gas turbine (50) is at least one of the pre-cooling gas turbines (50b) and the first air inlet stream (45) is the pre-cooling turbine air inlet stream (45a).

15. The apparatus according to claim 12 or 13, further comprising one or more main gas turbines (50c) arranged to drive said main compressors (210), each of said main gas turbines (50c) having a main turbine air inlet stream (45c), and whereby the first gas turbine (50) is at least one of the main gas turbines (50c) and the first air inlet stream (45) is the main turbine air inlet stream (45c).
